(19) Europäisches Patentamt

European Patent Office

Office européen des brevets

(11) **EP 2 662 943 A1**

(12) **EUROPEAN PATENT APPLICATION**
published in accordance with Art. 153(4) EPC

(43) Date of publication:
**13.11.2013 Bulletin 2013/46**

(51) Int Cl.:
*H02J 1/12* (2006.01)    *H01M 10/44* (2006.01)
*H01M 10/48* (2006.01)   *H02J 1/00* (2006.01)
*H02J 7/35* (2006.01)

(21) Application number: **11854576.3**

(22) Date of filing: **06.12.2011**

(86) International application number:
**PCT/JP2011/078171**

(87) International publication number:
**WO 2012/093538 (12.07.2012 Gazette 2012/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2011   JP 2011001399**

(71) Applicant: **Sharp Kabushiki Kaisha**
**Osaka-shi, Osaka 545-8522 (JP)**

(72) Inventor: **MATSUI, Ryoji**
**Osaka-shi, Osaka 545-8522 (JP)**

(74) Representative: **Müller - Hoffmann & Partner Patentanwälte**
**Innere Wiener Strasse 17**
**81667 München (DE)**

(54) **DC POWER SUPPLY SYSTEM**

(57)    Provided is a DC power supply system that controls a DC power supply unit to be within a predetermined voltage range.

A storage facility is connected to a DC power supply unit that supplies DC power to a load from a commercial power distribution system through a power converter. A voltage of the DC power supply unit is monitored, and the power converter is controlled to supply the power from the commercial power distribution system to the DC power supply unit if the voltage of the DC power supply unit is within a predetermined voltage range or lower and to supply the power from DC power supply unit to the commercial power distribution system if the voltage of the DC power supply unit is within the predetermined voltage range or higher.

**FIG. 1**

EP 2 662 943 A1

**Description**

Technical Field

The present invention relates to DC power supply systems, and more particularly relates to a DC power supply system that controls a DC power supply voltage to be within a predetermined voltage range.

Background Art

In recent years, dispersed power sources, such as a solar cell, a wind power generator, and a fuel cell, are becoming widespread. However, currently, DC power generated by a dispersed power source is converted into AC, and AC is converted into DC again and used in a device that consumes the power. Since DC/AC conversion and AC/DC conversion are performed as described above, a conversion loss is generated every conversion process. To solve this, there is suggested a DC power supply system that decreases a conversion loss by sending DC generated by a dispersed power source to a device to be used in the device without converting DC into AC.
Currently in Japan, a standard voltage of an AC voltage that is supplied to a general customer through a low-voltage power distribution system is 200 V or 100 V. The AC voltage is held within a range of 202 $\pm$ 20 V or a range of 101 $\pm$ 6 V (except in an abnormal situation such as a power failure, see NPL 1). Many electrical devices including home-use electrical products are designed on a precondition that power with an AC voltage within the predetermined range is supplied.

Citation List

Non Patent Literature

NPL 1: Denryoku-hinshitsu-kakuho ni kakaru Keito-renkeigijutsu-yoken-gaidorain (Guideline on System Link Technical Requirement for Securing Power Quality), Chapter 2, Section 2, 2. Voltage Variation, October 1, 2004, Agency for Natural Resources and Energy.

Summary of Invention

Technical Problem

As the DC power supply system is widespread to the general customer, it is requested to also hold a DC supply voltage to be within a predetermined range similarly to the AC voltage supplied by the current power distribution system. To meet the request, the invention provides a DC power supply system that controls a DC supply voltage to be within a predetermined voltage range.

Solution to Problem

To solve the above-described problem, the present invention provides a DC power supply system that connects a storage facility to a DC power supply unit that supplies DC power to a load from a power distribution system through a bidirectional power converter, and monitors a voltage of the DC power supply unit. The DC power supply system includes a controller that controls the bidirectional power converter to supply the power from the power distribution system to the DC power supply unit if the voltage of the DC power supply unit is within a predetermined voltage range or lower and to supply power from the DC power supply unit to the power distribution system if the voltage of the DC power supply unit is within the predetermined voltage range or higher.

Advantageous Effects of Invention

With the invention, the voltage change of the DC power supply unit is monitored, and transmission and reception of the power to the power distribution system by the bidirectional power converter is controlled in accordance with the voltage change. Accordingly, even if the output voltage of the storage facility varies, the voltage of the DC power supply unit can be held within the predetermined voltage range, and the supply voltage to the load becomes stable.

Brief Description of Drawings

[Fig. 1] Fig. 1 is a block diagram of a DC power supply system according to an embodiment of the invention.

[Fig. 2] Fig. 2 shows a capacity-voltage characteristic of a lithium-ion secondary battery that is used for the DC power supply system according to the embodiment of the invention.

[Fig. 3] Fig. 3 is a circuit diagram of a DC/AC converter that is used for the DC power supply system according to the embodiment of the invention.

[Fig. 4] Fig. 4 is a block diagram of a controller of the DC/AC converter that is used for the DC power supply system according to the embodiment of the invention.

[Fig. 5] Fig. 5 is a circuit diagram of an AC/DC converter that is used for the DC power supply system according to the embodiment of the invention.

[Fig. 6] Fig. 6 is a block diagram of a controller of the AC/DC converter that is used for the DC power supply system according to the embodiment of the invention.

[Fig. 7] Fig. 7 shows a capacity-voltage characteristic of a lithium-ion secondary battery that is used for a DC power supply system according to another embodiment of the invention.

[Fig. 8] Fig. 8 shows a current-target-value setting table 1 of the DC/AC converter and the AC/DC converter that are used for the DC power supply system according to the invention.

[Fig. 9] Fig. 9 shows a current-target-value setting table 2 of the DC/AC converter and the AC/DC converter that are used for the DC power supply system according to the invention.

[Fig. 10] Fig. 10 shows Current-target-value setting table 3 of the DC/AC converter and the AC/DC converter that are used for the DC power supply system according to the invention. Description of Embodiments

A DC power supply system according to the invention connects a storage facility to a DC power supply unit that supplies DC power to a load from a power distribution system through a bidirectional power converter, and monitors a voltage of the DC power supply unit. The DC power supply system includes a controller that controls the bidirectional power converter to supply the power from the power distribution system to the DC power supply unit if the voltage of the DC power supply unit is within a predetermined voltage range or lower and to supply power from the DC power supply unit to the power distribution system if the voltage of the DC power supply unit is within the predetermined voltage range or higher.

Also, in the DC power supply system according to the invention, a lower limit value of the predetermined voltage range may be preferably set at a lower limit value of a voltage stable range of the storage facility, and an upper limit value of the predetermined voltage range may be preferably set at an upper limit value of the voltage stable range of the storage facility. If the lower limit value of the predetermined voltage range is set at the lower limit value of the voltage stable range of the storage facility, and the upper limit value of the predetermined voltage range is set at the upper limit value of the voltage stable range of the storage facility as described above, the storage facility can be used in a wide voltage range of the voltage stable range. Accordingly, utilization efficiency of the storage facility is increased.

An AC power distribution system, to which the DC power supply system according to the invention is connected, is, for example, a single-phase two-wire type, a single-phase three-wire type, a three-phase three-wire type, or a three-phase four-wire type. An AC voltage is, for example, in a range from 90 to 440 V, and is typically 100 V. Also, in the invention, power can be bought from an AC power distribution system, and power generated by the dispersed power source can be sold to the AC power distribution system.

The bidirectional power converter includes an AC/DC converter and a DC/AC converter.

The load includes electrical devices, such as an air conditioner, a refrigerator, a washing machine, a television system, an illumination device, a personal computer, a computer, a copier, a facsimile, and a showcase.

The DC power supply unit is a part to which the DC power is supplied from the bidirectional power converter, the storage facility, and/or the dispersed power source. The DC power supply unit is arranged by interior wiring and is connected to the load.

The storage facility may representatively use a lithium-ion secondary battery. In particular, a lithium-ion secondary battery using lithium iron phosphate for a positive pole is suitable. However, the storage facility may use a lithium-ion secondary battery using cobalt-based lithium for a positive pole, a lithium-ion secondary battery using other material, or other battery, for example, a secondary battery of a lead battery or a nickel battery. The storage facility may preferably have a battery capacity corresponding to a power consumption of the load. Also, according to the invention, the storage facility is directly coupled to the DC power supply unit. That is, a power converter such as a DC/DC converter is not arranged between the storage facility and the DC power supply unit. Accordingly, even if a disturbance, such as a load variation, occurs, the voltage of the DC power supply unit can be held at a storage battery voltage by the storage facility. The storage facility has the predetermined voltage stable range, and the voltage range of the DC power supply unit is held within the voltage stable range. Hence, the predetermined voltage stable range of the storage facility is preferably set to meet the specified or standardized voltage range, as a DC power source supplied by the DC power supply unit. The voltage stable range is a voltage range that is set to provide control so that the DC voltage of the DC power supply unit holds a predetermined range.

In the DC power supply system according to the invention, the lower limit value of the predetermined voltage range may be preferably set at the lower limit value of the voltage stable range of the storage facility, and the upper limit value of the predetermined voltage range may be preferably set at the upper limit value of the storage facility. Also, the dispersed power source represents a power generator, such as a photovoltaic power generator, a wind power generator, or a fuel cell. When the dispersed power source is connected, if the voltage of the DC power supply unit is within the predetermined voltage stable range or higher, control is provided to increase the power to be supplied from the DC power supply unit to the power distribution system, i.e., the power to be sold.

The invention may further preferably include a self-path detector that detects input current from the DC power supply unit to the bidirectional power converter, and the controller may control the power converter in accordance with voltage information of the DC power supply unit and self-path current information of the self-path detector. To be more specific, a comparator may preferably compare control current of the bidirectional power converter changed by the controller with the self-path current information of the self-path detector, and the control current of the bidirectional power converter may be preferably controlled in accordance with a differential amount. Accordingly, if the DC power supply voltage is within the predetermined voltage range, a power sell amount or a power buy amount can be controlled to a target value without control on the DC power supply voltage as the target value.

Also, in the invention, a dispersed power source or a storage facility equipped with a dispersed power source may be preferably connected to the DC power supply unit in addition to the storage facility. Accordingly, since the bidirectional power converter is controlled by taking into consideration the power stored in the storage facility or the output generated by the dispersed power source, the stored power of the storage facility or the generated output of the dispersed power source can be effectively used.

Also, in the invention, the controller may preferably set a current-control target value that causes a voltage change within the predetermined voltage range to be a gentle change, and if the voltage of the DC power supply unit is changed, the controller may preferably control the control current of the bidirectional power converter based on the current-control target value. In particular, the controller may preferably set the current-control target value that causes the voltage change of the DC power supply unit to be a gentle change, in an upper limit portion or a lower limit portion of the predetermined voltage range. If the voltage of the DC power supply unit reaches the upper limit portion or the lower limit portion within the predetermined voltage range, the controller may preferably control the control current of the bidirectional power converter based on the current-control target value. Accordingly, the voltage of the DC power supply unit can be more finely and stably held.

A DC power supply system according to an embodiment of the invention is described below with reference to the drawings.

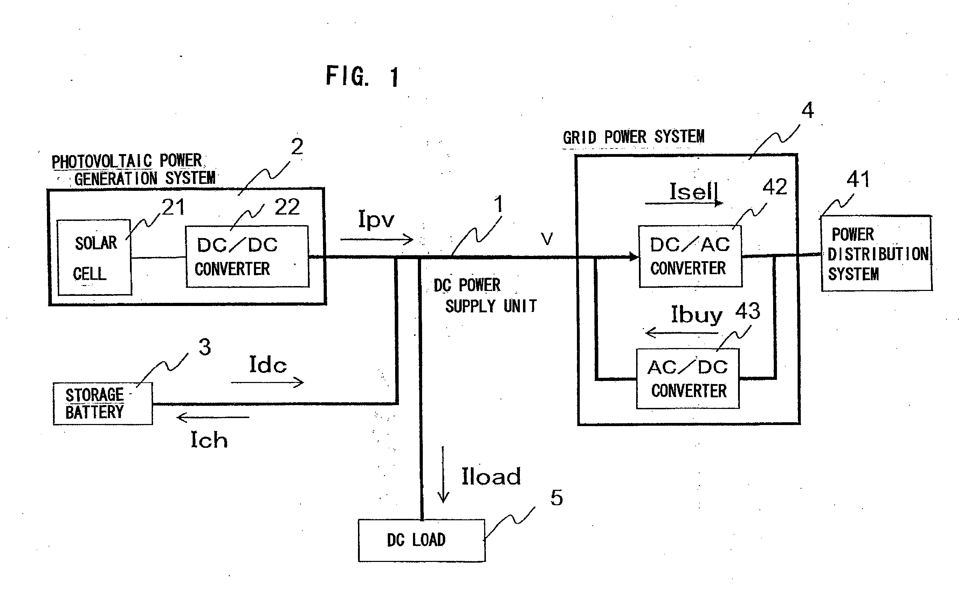

Fig. 1 is a block diagram of the embodiment of the invention. As shown in Fig. 1, the DC power supply system according to the invention is formed by connecting a photovoltaic power generation system 2, a storage battery 3, a power distribution grid system 4, and a DC load 5 to a DC power supply unit 1. The DC power supply unit 1 is connected to the photovoltaic power generation system 2, the storage battery 3, and the power distribution grid system 4 as mentioned above, and power is supplied to the DC load 5 from the photovoltaic power generation system 2, the storage battery 3, or the power distribution grid system 4. Fig. 1 shows the single DC power supply unit 1, the single photovoltaic power generation system 2, the single storage battery 3, the single power distribution grid system 4, and the single DC load 5. However, the number is not limited, and may be one or plural. A minimum configuration of the invention includes the DC power supply unit 1, the storage battery 3, the power distribution grid system 4, and the load 5.

Description is given below while V represents a voltage of the DC power supply unit 1, Ipv represents output current of the photovoltaic power generation system 2, Idc represents discharge current of the storage battery 3, Ich represents charge current of the storage battery 3, Isell represents current that flows to a DC/AC converter 42 of the power distribution grid system 4, Ibuy represents current that flows to an AC/DC converter 43, and Iload represents current that is supplied to the DC load 5.

The photovoltaic power generation system 2 includes a solar cell 21 and a DC/DC converter 22. This embodiment is explained such that the photovoltaic power generation system is a representative of a dispersed power source. However, a wind power generator, a fuel cell, or other dispersed power source may be employed.

The solar cell 21 may use a crystal solar cell, a polycrystal solar cell, or a thin solar cell. For example, a solar cell that can generate power of 5 kW with peak solar radiation.

The DC/DC converter 22 converts an output voltage for the solar cell 21 into a DC voltage to the DC power supply unit 1. The DC/DC converter 22 detects both voltage V and current Ipv of the DC power supply unit 1. If the voltage V of the DC power supply unit is equal to or lower than a voltage (420 V) in a full-charge state (100% remaining amount) of the storage battery 3, the DC/DC converter 22 performs maximum power point tracking (MPPT) control on the solar cell 21. However, if the voltage V of the DC power supply unit reaches the voltage (420 V) in the full-charge state (100% remaining amount) of the storage battery 3, the control is switched to control that holds the voltage V of the DC power supply unit at the voltage (420 V) in the full-charge state (100% remaining amount) of the storage battery 3. In this case, since the maximum power point tracking (MPPT) control is not performed for the solar cell 21, the power generation amount of the solar cell may be wasted by a certain degree. However, in the embodiment of the invention, the DC/DC converter controls the voltage of the DC power supply unit so as to be in the voltage stable range from 360 to 400 V. Accordingly, the voltage V does not reach 420 V unless the state is abnormal. Also, since the solar cell 21 generates power of 5 kW at maximum, the output current of the DC/DC converter is 5 kW/400 V = 12.5 A if the DC power supply voltage is 400 V.

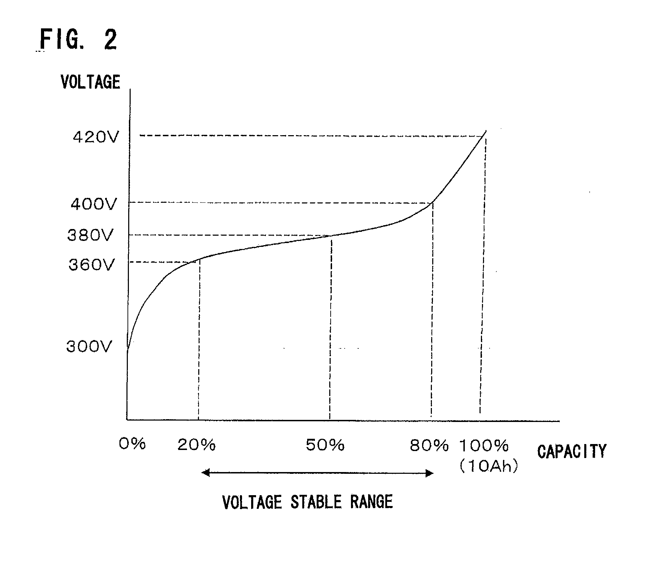

The storage battery 3 is a lithium-ion secondary battery, has a rated voltage of 380 V, is formed of 10 Ah (for example, 100 series and 1 parallel), and is directly coupled to the DC power supply unit 1. Direct coupling represents that a power converter such as a DC/DC converter is not arranged between the DC power supply unit 1 and the storage battery 3. Accordingly, the voltage of the DC power supply unit 1 is substantially equivalent to the voltage of the storage battery 3 (actually, a voltage drop occurs in wiring). The lithium-ion secondary battery has a capacity-voltage characteristic shown in Fig. 2. That is, the lithium-ion secondary battery is, for example, 300 V in an empty state (at 0%) of the battery capacity, 360 V at 20% of the battery capacity, 380 V (rated voltage) at 50% of the battery capacity, 400 V at 80% of the battery capacity, and 420 V at 100% (full-charge) of the battery capacity. The voltages described here are merely examples, and may be set in accordance with the specification or standardization of the DC power source. That is, the rated voltage may be set at a reference voltage of the DC supply voltage, the voltage in the empty state may be set at a voltage within the voltage stable range of the DC supply voltage or lower, and the voltage in the full-charge state may be set at a voltage within the voltage stable range of the DC supply voltage or higher.

The lithium-ion secondary battery has a battery voltage per cell of 3 V. The battery voltage is 4.2 V in the full-charge state. If power is discharged with the voltage of 3 V or lower, deterioration of the battery rapidly progresses. Therefore, the battery is used so that the voltage does not become 3 V or lower. Also, even if the power of the lithium-ion secondary battery is discharged with the voltage of 3 V or lower, or up to 0 V, only slight discharge is performed. Therefore, the lithium-ion secondary battery should not be used with the voltage of 3 V or lower. In this embodiment, the lithium-ion secondary battery is representatively described. However, other battery, such as a lead battery or a nickel battery may be used.

As described above, the storage battery 3 has the voltage stable range of $\pm 20$ V around the voltage of 380 V at 50% of the battery capacity. In particular, the voltage stable range is from 360 to 400 V at 20% to 80% of the battery capacity. Hence, for the storage battery 3, a storage battery with a small voltage variation like $\pm 20$ V around 380 V at 20% to 80% of the battery capacity is selected. In other words, a storage battery that corresponds to the specified or standardized setting of the DC power source, that the center voltage of the DC power source meets the voltage at 50% of the battery capacity, that the upper limit voltage of the DC power source meets a voltage within the voltage stable range or higher of the battery, and that the lower limit voltage of the DC power source meets a voltage within the voltage stable range or lower of the battery is selected. As described above, if a storage battery with a small voltage variation is used, the storage battery capacity can be used in a wide range, and utilization efficiency of the storage battery can be increased.

The load 5 is, for example, an electrical device, such as an air conditioner, a refrigerator, a washing machine, a television system, an illumination device, or a personal computer, when being used at home. When being used in an office, the load 5 is an electrical device, such as a computer, a copier, or a facsimile. When being used in a store, the load 5 may be a showcase or an illumination device. Of course, other than the electrical device listed above, any electrical device that consumes power may be used. According to the invention, it is assumed that the current consumption of the load 5 is 0 A if no electrical device is used, and is, for example, 15 A at maximum if all electrical devices are used. Accordingly, the current consumption of the load varies from 0 to 15 A.

The power distribution grid system 4 is connected to the power distribution system 41, and is formed of a bidirectional converter that converts AC into DC of the DC power supply unit 1 or converts DC of the DC power supply unit 1 into AC of the power distribution system 41. To be more specific, the power distribution grid system 4 includes the DC/AC converter 42 that converts AC of the power distribution system 41 into DC, and the AC/DC converter 43 that converts AC of the power distribution system 41 into DC.

The voltage of the commercial power sent from a power company to the power distribution system 41 is single-phase two-wire AC of 100 V (101 $\pm$ 6 V), three-phase three-wire AC of 200 V (202 $\pm$ 20 V), or three-phase four-wire AC of 100/200 V. Also, according to the invention, power may be bought from the power distribution system or power generated by a dispersed power source may be sold to the power distribution system.

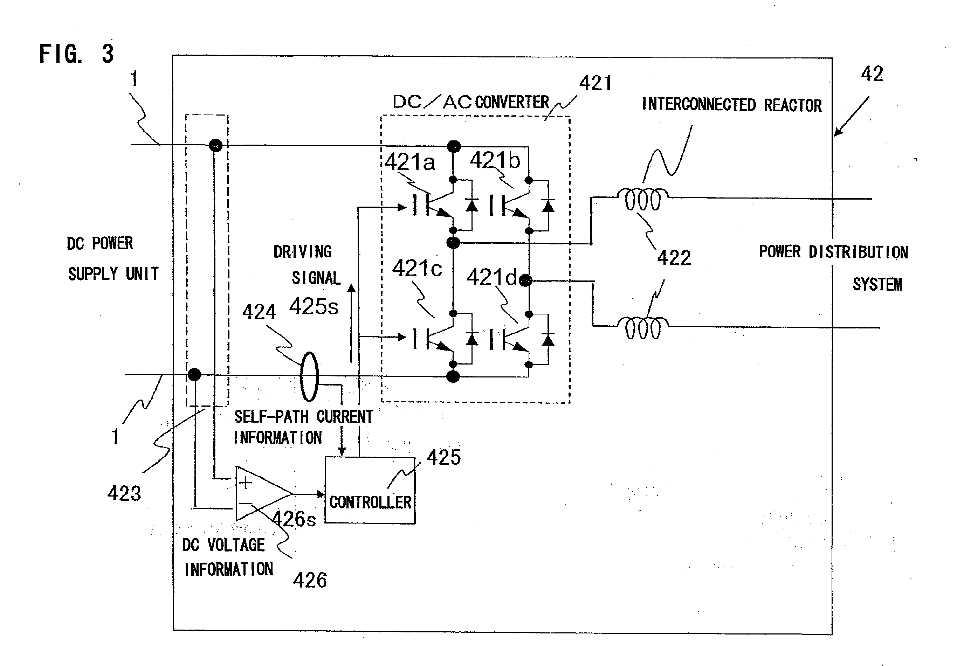

Fig. 3 is a circuit diagram of the DC/AC converter 42. The DC/AC converter 42 includes a DC/AC converter 421 that is formed by connecting four switching elements 421a to 421d in bridge forms, two interconnected reactors 422, a voltage detector 423 that detects a DC voltage of the DC power supply unit 1, a current detector 424 that detects current of the DC power supply unit 1, and a controller 425. The DC/AC converter 42 converts the DC voltage of the DC power supply unit 1 into AC 200 V of the power distribution system 41.

In the DC power supply system according to the invention, the storage battery 3 is directly coupled to the DC power supply unit 1. Accordingly, if the voltage detector 423 detects the DC voltage of the DC power supply unit 1, the voltage of the storage battery 3 can be detected. Hence, by using the detected voltage of the voltage detector 423, the remaining amount of the storage battery can be expected in accordance with the capacity-voltage characteristic of the storage battery shown in Fig. 2. The detected voltage of the voltage detector 423 is input to the controller 425 through a differential amplifier 426.

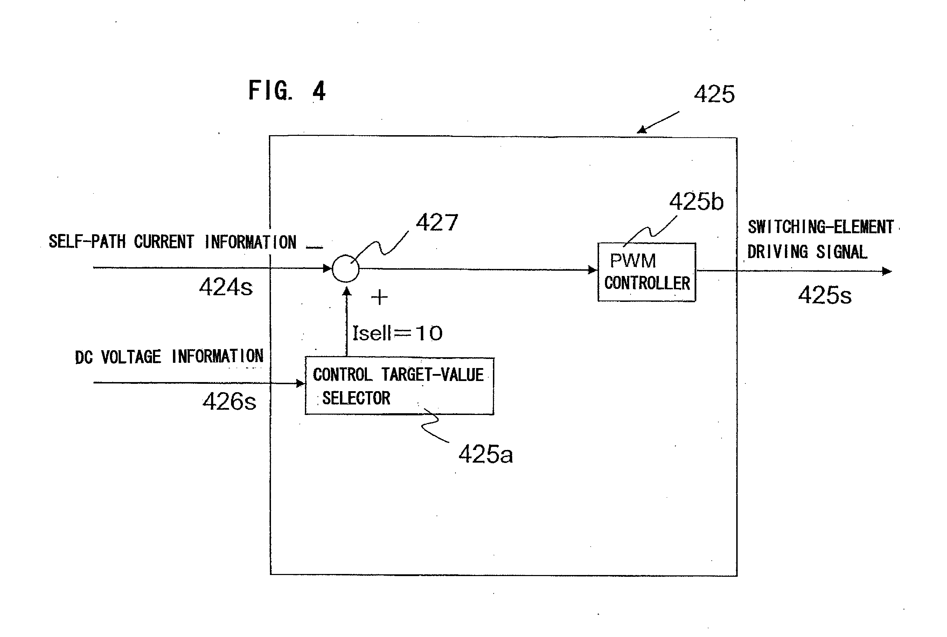

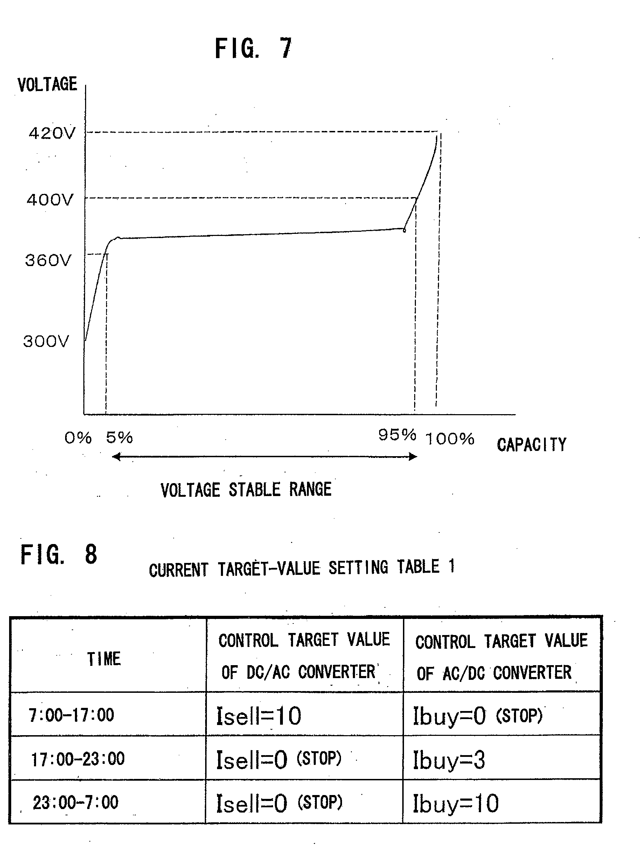

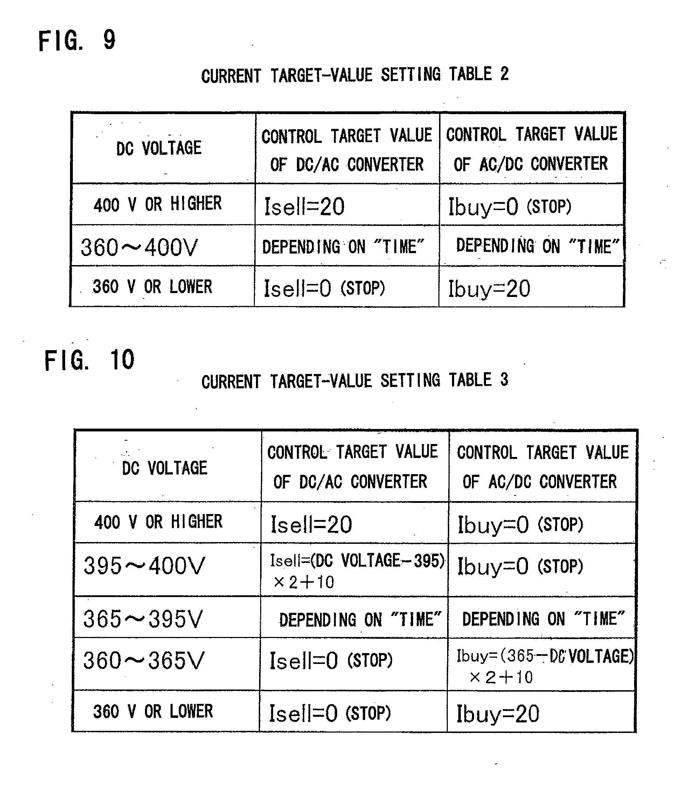

Fig. 4 is a block diagram of the controller 425. The controller 425 includes a control target-value selector 425a, a PWM controller 425b, and a comparator 427. As shown in Fig. 3, the control target-value selector 425a receives the DC voltage of the DC power supply unit 1 detected by the voltage detector 423, as DC voltage information 426s through the differential detector 426, determines a current target value Isell according to a current target-value setting table 1 or 2 in Fig. 8 or 9, and outputs the current target value Isell to the comparator 427. The current target-value setting tables 1 and 2 in Figs. 8 and 9 will be described later. The comparator 427 receives the self-path current of the DC power supply unit 1 detected by the current detector 424 (Fig. 3), as self-path current information 424s. The comparator 427 compares the current target value Isell with the self-path current information 424s, and outputs a differential amount. Based on the differential amount, the PWM controller 425b generates a driving signal 425s that drives the four switching elements 421a to 421d of the DC/AC converter 421 by duty driving.

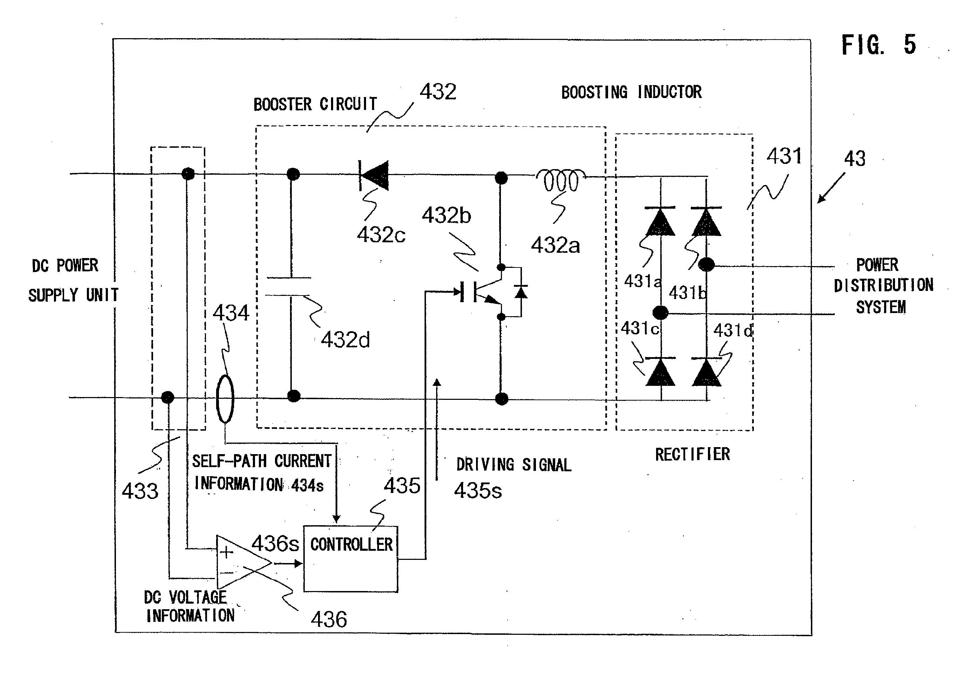

Fig. 5 is a circuit diagram of the AC/DC converter 43. The AC/DC converter 43 includes a rectifier 431, a booster circuit 432, a voltage detector 433, a current detector 434, and a controller 435. The AC/DC converter 43 converts AC 200 V into the DC voltage to the DC power supply unit 1.

The rectifier 431 is formed by connecting four diodes 431a to 431d in bridge forms. The booster circuit 432 includes a boosting inductor 432a, a switching element 432b, a diode 432c, and a smoothing capacitor 432d. The voltage detector 433 detects the voltage V of the DC power supply unit 1, and provides DC voltage information 436s to the controller 435 through a differential amplifier 436. The current detector 434 detects self-path current flowing to the DC power supply unit 1, and provides self-path current information 434s to the controller 435.

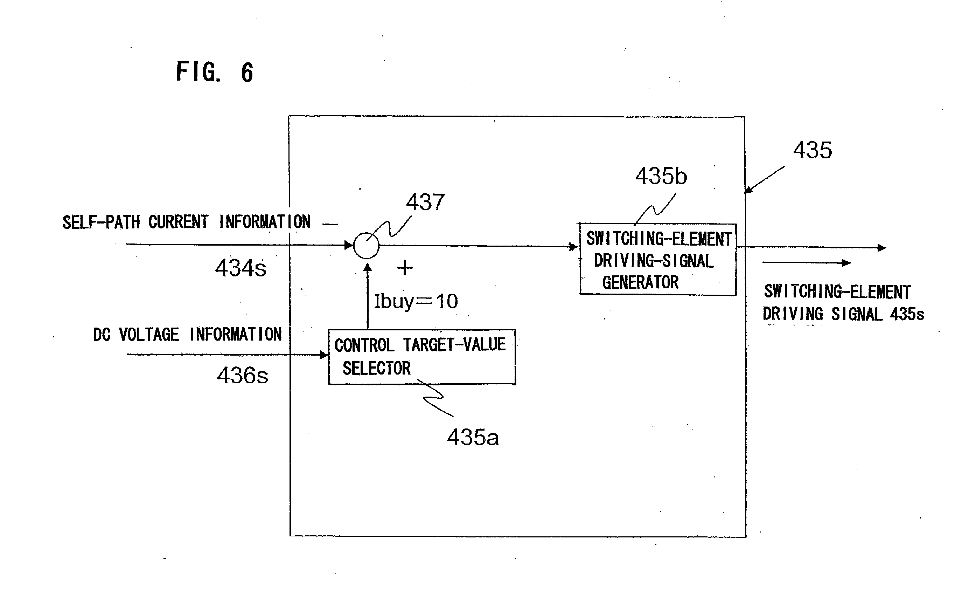

Fig. 6 is a block diagram of the controller 435. The controller 435 is similar to the controller 425 of the DC/AC converter 42 shown in Fig. 4, and includes a control target-value selector 435a, a switching-element driving-signal generator 435b, and a comparator 437.

The control target-value selector 435a receives the DC voltage of the DC power supply unit 1 detected by the voltage detector 433 (Fig. 5) through the differential detector 436, as the DC voltage information 436s. The control target-value selector 435a determines a current target value Ibuy according to the current target-value setting table 1 or 2 shown in Fig. 8 or 9. The current target-value setting tables 1 and 2 in Figs. 8 and 9 will be described later. The self-path current of the DC power supply unit 1 detected by the current detector 434 (Fig. 5) is given as the self-path current information 434s to the comparator 437. The comparator 437 compares the current target value Ibuy with the self-path current information 434s, and outputs a differential amount. Based on the differential amount, the switching-element driving-signal generator 435b generates a switching driving signal 435s by PI control through comparison between triangular waves to drive the switching element 432b by duty driving.

Fig. 8 shows the current target-value setting table 1 in case when the dispersed power source is the photovoltaic power generation system 2 and when the photovoltaic power generation system 2 is controlled in accordance with its power-generation time. Based on the current target-value setting table 1 in Fig. 8, the control target-value selector 425a in Fig. 4 is controlled, and the control target-value selector 435a in Fig. 6 is controlled.

That is, the control target-value selector 425a acquires the DC voltage information 426s, as the voltage V of the DC power supply unit 1, from the voltage detector 423 through the differential amplifier 426. If the weather is sunny, the photovoltaic power generation system 2 provides a power-generation voltage with a DC voltage in a range from 360 to 400 V from 7:00 to 17:00. Hence, the control target-value selector 425a controls the current target value Isell of the DC/AC converter 42 to be 10 A. To control the current target value Isell to be 10A, duty control is performed on the DC/AC converter 421 so that the current target value Isell becomes 10A. This represents that, since the DC voltage of the DC power supply unit 1 is within the specified or standardized voltage range as the DC power source, and since the photovoltaic power generation system outputs power by a predetermined power generation amount, the power of 10 A is sold.

In a period of time (from 17:00 to 23:00, and from 23:00 to 7:00) other than the above period of time, there is no output of power generation of the photovoltaic power generation system. Hence, the current target value Isell of the DC/AC converter 42 is controlled to be 0 A. Since the current target value Isell is 0 A, the output of the comparator 427 becomes 0. Accordingly, the PWM controller 425b outputs a driving signal with a duty ratio of 0, and hence stops the operation of the DC/AC converter 421. Thus, the power is no longer sold from the DC power supply unit 1 to the power distribution system 41. The power from the storage battery 3 is supplied to the load 5. Instead of controlling the current target value Isell to be 0 A as described above, a signal that stops the DC/AC converter 421 may be output.

Meanwhile, the control target-value selector 435a acquires the DC voltage information 436s from the voltage detector 433 shown in Fig. 5 through the differential amplifier 436. If the weather is sunny, the photovoltaic power generation system 2 provides a power-generation voltage with a DC voltage in a range from 360 to 400 V from 7:00 to 17:00. Hence, the control target-value selector 435a controls the current target value Ibuy of the AC/DC converter 43 to be 0 A. To control the current target value Ibuy to be 0 A, the switching element 432b controls the current target value Ibuy to be 0 A. Since the current target value Ibuy is controlled to be 0 A, the output of the comparator 437 becomes 0. Accordingly, the switching-element driving-signal generator 435b outputs a driving signal with a duty ratio of 0, and hence stops the operation of the booster circuit 432. Accordingly, the power is no longer bought by the DC power supply unit 1 from the power distribution system 41. Instead of controlling the current target value Ibuy to be 0 A, a signal that stops the AC/DC converter 43 may be output. This represents that, since the DC voltage of the DC power supply unit 1 is in the range from 360 to 400 V and the DC voltage of the DC power supply unit 1 is within the specified or standardized voltage range as the DC power source from 7:00 to 17:00, the power does not have to be bought from the power distribution system 41.

However, in other period of time, for example, from 17:00 to 23:00, if the DC voltage V of the DC power supply unit 1 is in the range from 360 to 400 V, the control target-value  selector 435a controls the current target value Ibuy of the AC/DC converter 43 to be 3 A. To control the current target value Ibuy to be 3 A, duty control is performed on the switching element 432b so that the current target value Ibuy becomes 3 A. This represents that, since the DC voltage V of the DC power supply unit 1 is within the specified or standardized voltage range as the DC power source and the power generation output of the photovoltaic power generation system 2 is not provided, the power is bought from the power distribution system 41 by an amount of shortage.

Further, for example, from 23:00 to 7:00, if the DC voltage of the DC power supply unit 1 is in the range from 360 to 400 V, the control target-value selector 435a controls the current target value Ibuy of the AC/DC converter 43 to be 10 A. To control the current target value Ibuy to be 10 A, the duty control is performed on the switching element 432b so that the current target value Ibuy becomes 10 A. This represents that, since the DC voltage of the DC power supply unit 1 is within the specified or standardized voltage range as the DC power source and the power generation output of the photovoltaic power generation system 2 is not provided, nighttime power is bought from the power distribution system 41 by an amount of shortage for demand power and an amount of charge for charge power.

Described above is the case in which the DC voltage V of the DC power supply unit 1 is within the specified or standardized voltage range (from 360 to 400 V) as the DC power source. Next, a case in which the DC voltage V of the DC power supply unit 1 is outside the specified or standardized voltage range of the DC power source is described with use of the current target-value setting table 2 shown in Fig. 9.

In particular, the case is that the DC voltage V of the DC  power supply unit 1 is within the specified or standardized voltage range as the DC power source or higher. For example, the case is that the power generation output of the photovoltaic power generation system is increased, or no load is provided, and hence $V \geq 400$ V is established. In this case, as shown in Fig. 9, the control target-value selector 425a controls the current target value Isell of the DC/AC converter 42 to be 20 A.

To control the current target value Isell to be 20A, the duty control is performed on the DC/AC converter 421 so that the current target value Isell becomes 20A. This represents that, since the DC voltage V of the DC power supply unit 1 is within the specified or standardized voltage range of the DC power source or higher, power of 20A is sold. The photovoltaic power generation system according to this embodiment is set so as to output power of 400 V and 12.5 A at maximum. If the current target value Isell = 20 A, the storage battery is forced to be discharged. At this time, the AC/DC converter 43 is controlled so that its operation is stopped.

In contrast, if the DC voltage V of the DC power supply unit 1 is within the specified or standardized voltage range as the DC power source or lower, for example, this situation represents that the power generation output of the photovoltaic power generation system is decreased, or a large load is connected, and hence $V \leq 360$ V is established. In this case, the control target-value selector 435a controls the current target value Ibuy of the AC/DC converter 43 to be 20 A. The duty control is performed on the switching element 432b so that the current target value Ibuy becomes 20A. This represents that, since the DC voltage of the DC power supply unit 1 is within the specified or standardized voltage range of the DC power source or lower, power of 20A is bought. Also, since the maximum value of the DC load is 15A, if the current  target value Ibuy = 20A, the storage battery is forced to be charged. At this time, the DC/AC converter 42 is controlled so that its operation is stopped.

From among the current target-value setting table 1 shown in Fig. 8 and the current target-value setting table 2 shown in Fig. 9, the current target-value setting table 2 shown in Fig. 9 is used with a higher priority.

Described above is the case in which, if the photovoltaic power generation system 2 as the dispersed power source is connected to the DC power supply system according to the invention, the control is performed in accordance with the power-generation time (from 7:00 to 17:00) of the photovoltaic power generation system. However, since the power-generation time varies depending on the season, the power-generation time may be preferably changed in accordance with the season. Alternatively, in a case of wind power generation, since the power generation output is provided regardless of the time, the control may preferably be made in accordance with the power generation output. Still alternatively, if a fuel cell is used, the control may be preferably made in accordance with the use time or the power generation output of the fuel cell.

In Figs. 8 and 9, the current target values Isell and Ibuy are each changed stepwise like 0, 3, 10, or 20 A. However, if the current target value is changed stepwise, a voltage variation of the DC power supply unit 1 may be generated stepwise. To reduce such a disadvantage, the number of steps may be increased and multiple steps may be used.

Alternatively, a current target-value setting table 3 shown in Fig. 10 may be preferably used. In particular, in Fig. 10, a current target value that causes a voltage change of the DC power supply unit to be a gentle change is set in an upper limit portion or a lower limit portion within the voltage stable range, and controls the control target-value selector 425a or the control target-value selector 435a based on the current target value.

For example, in the current target-value setting table 3, if the DC voltage V of the DC power supply unit 1 is in a range from 365 to 395 V, control is made according to the current target-value setting table 1 shown in Fig. 8. Also, if the DC voltage V is in a range of 400 V or higher or in a range of 360 V or lower, control is made according to the current target-value setting table 2 shown in Fig. 9. However, if the DC voltage of the DC power supply unit 1 is in a range from 395 to 400 V (the upper limit portion) or in a range from 360 to 365 V (the lower limit portion), control is made as follows. If the DC voltage V of the DC power supply unit 1 is in the range from 395 to 400 V, the control target-value selector 425a controls the current target value Isell of the DC/AC converter 42 like Expression (1) as follows:

$$\mathtt{Isell\ =\ (DC\ voltage\ -\ 395)\ \times\ 2\ +\ 10\ ...\ (1),}$$

(where 395, 2, and 10 are constants).
To control the current target value Isell based on Expression (1), the duty control is performed on the DC/AC converter 421. This represents that, since the DC voltage of the DC power supply unit 1 is in the upper limit portion of the specified or standardized voltage range as the DC power source, control is performed for a gentle change such as a half of a change of the DC voltage. At this time, the current target value Ibuy is controlled to be 0, and the AC/DC converter 43 is controlled so that its operation is stopped.

If the DC voltage V of the DC power supply unit 1 is in the range from 360 to 365 V, the control target-value selector 435a controls the current target value Ibuy of the AC/DC converter 43 like Expression (2) as follows:

$$\mathtt{Ibuy\ =\ (365\ -\ DC\ voltage)\ \times\ 2\ +\ 10\ ...\ (2),}$$

(where 365, 2, and 10 are constants).
To control the current target value Isell based on Expression (2), the duty control is performed on the switching element 432b. This represents that, since the DC voltage of the DC power supply unit 1 is in the lower limit portion of the specified or standardized voltage range as the DC power source, control is performed for a gentle change such as a half of a change of the DC voltage. At this time, the current target value Isell is controlled to be 0, and the DC/AC converter 42 is controlled so that its operation is stopped.

With the above-described configuration, the DC power supply voltage can be operated within the range from 360 to 400 V without a power converter arranged between the storage battery and the DC power supply unit. Accordingly, a system with high efficiency and low cost can be realized.

In this embodiment, the DC/DC converter 22 is used. However, this converter may be omitted. In this case, the voltage of the storage battery has to be designed to become as close as possible to the maximum power point voltage of the solar cell.

In the above-described embodiment, the typical lithium-ion secondary battery having the capacity-voltage characteristic in Fig. 2 is used for the storage battery 3. However, a lithium-ion secondary battery using lithium iron phosphate for a positive pole may be used. Fig. 7 shows a capacity-voltage characteristic of this battery. When the voltage stable range is set from 360 to 400 V, this battery can be used in a range from 5% to 95% of the capacity. As compared with the storage battery having the capacity-voltage characteristic in Fig. 2, capacity utilization of the storage battery can be increased.

In the above-described embodiment, the current target value Ibuy or Isell is set in accordance with the time as shown in Fig. 8. However, the current target value may be set by any method. For example, the current target value Ibuy or Isell may be set in accordance with an external signal instead of the time. Fig. 8 provides merely an example, and the setting method is not limited to the method of the above-described embodiment. However, the target current-value control through the voltage setting shown in Fig. 9 has to be performed. The current target-value setting table 2 shown in Fig. 9 has precedence over the current target-value setting table shown in Fig. 8 regardless of the way of setting the current target value Ibuy or Isell according to the current target-value setting table shown in Fig. 8.

Reference Signs List

| | |
|---|---|
| 1 | DC power supply unit |
| 2 | photovoltaic power generation system |
| 3 | storage battery |
| 4 | power distribution grid system |
| 5 | DC load |
| 21 | solar cell |
| 41 | power distribution system |
| 42 | DC/AC converter |
| 43 | AC/DC converter |
| 421 | DC/AC converter |
| 423 | DC voltage detector |
| 424 | self-path current detector |
| 425 | controller |
| 425a | control target-value selector |
| 425b | PWM controller |
| 431 | rectifier |
| 432 | booster circuit |
| 432b | switching element |
| 433 | DC voltage detector |
| 434 | self-path current detector |
| 435 | controller |
| 435a | control target-value selector |
| 435b | switching-element driving-signal generator |

## Claims

1. A DC power supply system that connects a storage facility to a DC power supply unit that supplies DC power to a load from a power distribution system through a bidirectional power converter, and monitors a voltage of the DC power supply unit, wherein the DC power supply system comprises a controller that controls the bidirectional power converter to supply the power from the power distribution system to the DC power supply unit if the voltage of the DC power supply unit is within a predetermined voltage range or lower and to supply power from the DC power supply unit to the power distribution system if the voltage of the DC power supply unit is within the predetermined voltage range or higher.

2. The DC power supply system according to claim 1, wherein the predetermined voltage range is set to correspond to a voltage stable range of the storage facility.

3. The DC power supply system according to claim 1 or 2, further comprising a self-path detector that detects input current from the DC power supply unit to the bidirectional power converter, wherein a comparator compares self-path current of the self-path detector with control current used by the controller to control the bidirectional power converter, and the controller controls the bidirectional power converter in accordance with a differential amount obtained by the comparison.

4. The DC power supply system according to any of claims 1 to 3, further comprising a dispersed power source connected to the DC power supply unit.

5. The DC power supply system according to claim 4, wherein the controller controls the bidirectional power converter in  accordance with a power-generation time of the dispersed power source.

6. The DC power supply system according to any of claims 1 to 5, wherein the controller has a function of controlling a direction of current, which flows between the DC power supply unit and the bidirectional power converter, and a current value in accordance with the voltage of the DC power supply unit if the voltage of the DC power supply unit is within the predetermined voltage range.

7. The DC power supply system according to claim 6, wherein the controller sets a current-control target value that causes a voltage change in an upper limit portion or a lower limit portion within the predetermined voltage range to be a gentle change, and the controller controls the bidirectional power converter based on the current-control target value if the voltage of the DC power supply unit reaches the upper limit portion or the lower limit portion within the predetermined voltage range.

# FIG. 1

# FIG. 2

VOLTAGE STABLE RANGE

# FIG. 3

DC POWER SUPPLY UNIT

DC/AC CONVERTER 421

421a  421b

421c  421d

DRIVING SIGNAL 425s

424

SELF-PATH CURRENT INFORMATION

423

DC VOLTAGE INFORMATION  426

426s

CONTROLLER 425

INTERCONNECTED REACTOR

422

POWER DISTRIBUTION SYSTEM

42

1

1

EP 2 662 943 A1

# FIG. 4

SELF-PATH CURRENT INFORMATION

424s

DC VOLTAGE INFORMATION

426s

427

Isell＝10

CONTROL TARGET-VALUE
SELECTOR

425a

425

425b

PWM
CONTROLLER

SWITCHING-ELEMENT
DRIVING SIGNAL

425s

EP 2 662 943 A1

FIG. 5

EP 2 662 943 A1

# FIG. 6

SELF-PATH CURRENT INFORMATION —

434s

DC VOLTAGE INFORMATION

436s

CONTROL TARGET-VALUE SELECTOR

Ibuy=10

+

437

435b

SWITCHING-ELEMENT DRIVING-SIGNAL GENERATOR

435

SWITCHING-ELEMENT DRIVING SIGNAL 435s

435a

EP 2 662 943 A1

## FIG. 7

VOLTAGE STABLE RANGE

## FIG. 8

CURRENT TARGET-VALUE SETTING TABLE 1

| TIME | CONTROL TARGET VALUE OF DC/AC CONVERTER | CONTROL TARGET VALUE OF AC/DC CONVERTER |
|---|---|---|
| 7:00-17:00 | Isell=10 | Ibuy=0 (STOP) |
| 17:00-23:00 | Isell=0 (STOP) | Ibuy=3 |
| 23:00-7:00 | Isell=0 (STOP) | Ibuy=10 |

FIG. 9

CURRENT TARGET-VALUE SETTING TABLE 2

| DC VOLTAGE | CONTROL TARGET VALUE OF DC/AC CONVERTER | CONTROL TARGET VALUE OF AC/DC CONVERTER |
|---|---|---|
| 400 V OR HIGHER | Isell=20 | Ibuy=0 (STOP) |
| 360~400V | DEPENDING ON "TIME" | DEPENDING ON "TIME" |
| 360 V OR LOWER | Isell=0 (STOP) | Ibuy=20 |

FIG. 10

CURRENT TARGET-VALUE SETTING TABLE 3

| DC VOLTAGE | CONTROL TARGET VALUE OF DC/AC CONVERTER | CONTROL TARGET VALUE OF AC/DC CONVERTER |
|---|---|---|
| 400 V OR HIGHER | Isell=20 | Ibuy=0 (STOP) |
| 395~400V | Isell=(DC VOLTAGE-395)×2+10 | Ibuy=0 (STOP) |
| 365~395V | DEPENDING ON "TIME" | DEPENDING ON "TIME" |
| 360~365V | Isell=0 (STOP) | Ibuy=(365-DC VOLTAGE)×2+10 |
| 360 V OR LOWER | Isell=0 (STOP) | Ibuy=20 |

<div align="center">

**INTERNATIONAL SEARCH REPORT**

</div>

| | International application No. |
|---|---|
| | PCT/JP2011/078171 |

**A. CLASSIFICATION OF SUBJECT MATTER**
*H02J1/12*(2006.01)i, *H01M10/44*(2006.01)i, *H01M10/48*(2006.01)i, *H02J1/00*
(2006.01)i, *H02J7/35*(2006.01)i

According to International Patent Classification (IPC) or to both national classification and IPC

**B. FIELDS SEARCHED**

Minimum documentation searched (classification system followed by classification symbols)
H02J1/12, H01M10/44, H01M10/48, H02J1/00, H02J7/35

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-129585 A (Hitachi, Ltd.),<br>18 May 2006 (18.05.2006),<br>paragraphs [0015] to [0062]; fig. 1, 6<br>(Family: none) | 1,2,4,6<br>3,5,7 |
| A | JP 2009-142013 A (Sharp Corp.),<br>25 June 2009 (25.06.2009),<br>entire text; all drawings<br>& US 2010/0253148 A1 & EP 2224571 A1<br>& WO 2009/072415 A1 | 1-7 |
| A | JP 6-327146 A (Central Research Institute of<br>Electric Power Industry),<br>25 November 1994 (25.11.1994),<br>entire text; all drawings<br>(Family: none) | 1-7 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 February, 2012 (28.02.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 662 943 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Denryoku-hinshitsu-kakuho ni kakaru Keito-renkeig-ijutsu-yoken-gaidorain. Voltage Variation. Agency for Natural Resources and Energy, 01 October 2004